# FASCICULE DE BREVET EUROPEEN

(11) **EP 1 318 763 B1**
(45) Date de publication et mention de la délivrance du brevet: **03.12.2008**
(21) Numéro de dépôt: 01972159.6
(22) Date de dépôt: 18.09.2001
(51) Int. Cl.: A61C 8/00

(54) **JEU D'IMPLANTS ET IMPLANTS CORRESPONDANTS**
IMPLANTATSATZ UND ZUGEHÖRIGE IMPLANTATE
IMPLANT SET AND CORRESPONDING IMPLANTS

(30) Priorité: 19.09.2000 FR 0011944
(43) Date de publication de la demande: 18.06.2003
(73) Titulaire: Paris Implants, 92500 Rueil-Malmaison (FR)
(72) Inventeur: Peltier, Guy, Gabriel, 92500 Rueil-Malmaison (FR); Peltier, Patrick, 92500 Rueil-Malmaison (FR)
(74) Mandataire: Grand, Guillaume
(86) Numéro de dépôt international: PCT/FR2001/002901
(87) Numéro de publication internationale: WO 2002/024098

(56) Documents cités:
- EP-A- 0 515 274
- EP-A- 0 903 116
- WO-A-99/23970
- GB-A- 2 252 501
- US-A- 3 717 932
- US-A- 3 950 850
- US-A- 4 474 556
- US-A- 5 593 410
- US-A- 5 947 733
- US-A- 5 984 681
- PATENT ABSTRACTS OF JAPAN vol. 1997, no. 02, 28 février 1997 (1997-02-28) -& JP 08 252269 A (G C:KK), 1 octobre 1996 (1996-10-01)

## Description

La présente invention a trait à un perfectionnement aux implants dentaires.

Un implant dentaire comporte, usuellement, un corps d'implant, en général extérieurement fileté et intérieurement taraudé, comme dans WO-A-99/23970, destiné à être implanté dans le tissu osseux de la mandibule ou du maxillaire et, une pièce dite pilier ou faux-moignon susceptible d'être transfixée sur le corps de l'implant, de façon à s'élever au dessus de l'implant, pour pouvoir recevoir une prothèse dentaire. Afin que la prothèse soit convenablement orientée, avec un bon parallélisme par rapport aux dents naturelles, il est nécessaire de pouvoir orienter, autour de l'axe du corps de l'implant, le pilier ou faux-moignon, puis le fixer. Il en est de même pour l'inclinaison, qui peut être obtenue, soit par un moyen d'inclinaison variable, soit par un jeu de piliers pré-inclinés selon des angles différents.

Des implants en deux parties assemblables sont, par exemple, décrits dans US-A-5 947 733, DOS 27 43 035, GB-A-2 252 501, EP-A-0 337 759, EP 0 139 052, JP-A-08 252269.

Pour un réglage angulaire en rotation autour de l'axe du corps de l'implant, il est connu d'utiliser des moyens d'indexation, tel qu'un assemblage polygonal, par exemple à 6, voire 12 pans, ou un assemblage dentelé sur face d'implant et du pilier, par exemple de 24 à 36 dents. Ces moyens d'indexation connus créent des diminutions locales d'épaisseur et des difficultés de pose parfois qui peuvent être préjudiciables à la solidité de l'ensemble, compte tenu des très gros efforts auxquels l'implant peut être soumis.

Le document US-A 3 950 850, qui correspond à l'état de la techique le plus proche de l'invention décrit un jeu d'implants monoblocs en alumine avec des angles différents entre le corps et le pilier. Les corps d'implant sont réalisés soit sous forme de bases plates, soit sous forme de corps coniques de section elliptique pour s'opposer à la rotation. Afin de s'opposer à l'extraction, les corps elliptiques, qui possèdent une conicité élevée, présentent une succession de gorges annulaires séparées par des arêtes inscrites dans le cône géométrique. Les implants nécessitent le forage d'orifices non circulaires et une forte impaction lors de la pose, de sorte que leur mise en place est traumatisante pour le tissu osseux, sans garantir une absence de risque d'extraction, surtout au début. De plus, les implants coudés ne peuvent être insérés que dans une seule position angulaire.

US-A-4 474 556 décrit un implant rectiligne monobloc en céramique telle que l'alumine, et dont le corps d'implant présente une succession de gorges en forme d'ondulations dont les sommets arrondis tangentent un cône géométrique de conicité comprise entre 2,5° et 10°. II n'est pas prévu de modifier ces implants pour en faire un jeu d'angles différents. Cet implant nécessite un bon comblement osseux des gorges pour s'opposer à l'extraction, de sorte que la fixation osseuse initiale est assurée par une ondulation extrème inferieure saillante. Ce document divulgue également un foret de même conicité que celle associée au corps d'implant et muni de lèvres coupantes hélicoïdales.

Afin d'éviter la constitution de tels jeux d'implants, FR-A-2 759 283 décrit un implant monobloc en zircone dont la forme du corps d'implant est déterminée par prise d'une empreinte dans la cavité osseuse scannérisée en trois dimensions pour servir de gabarit pour l'usinage d'une barette moulée en zircone. Ce procédé est très compliqué et nécessite un usinage du zircone moulé, ce qui est une opération particulièrement difficile.

La présente invention a pour objet un jeu d'implants dentaires, tel que défini à le revendication 1.

A titre d'exemple, un jeu peut avoir sept implants individuels avec des angels de 0°, 5°, 10°, 15°, 20°, 25°, 30°. Si le jeu comporte des angles allant jusqu'à 45° il peut comporter, en plus, par exemple, des implants à 35°, 40° et 45°.

Bien entendu d'autres variations d'angles sont possibles, par exemple de 10° en 10°, ou des valeurs entre 5 et 10°, ou des combinaisons de ces valeurs, par exemple de 5 en 5° pour les angles les plus faibles et de 10 en 10° pour les angles plus importants.

Grâce aux surfaces coniques de section circulaire du corps d'implant possédant la conicité selon l'invention, on constate que l'implant s'oppose fermement à la remontée, notamment en début d'implantation, même sans moyen d'accrochage supplémentaire.

Des caractéristiques avantageuses sont définies aux revendications dépendantes 3 à 18. En particulier, lors de l'enfoncement de l'implant dans l'os, pendant lequel le praticien enfonce l'implant tout en lui faisant subir de petites rotations alternées autour de son axe, les petits reliefs selon la revendication 7 finissent par frayer leur passage en rainurant l'os selon un trajet en dents de scie, interdisant le retrait de l'implant hors du trou.

Les petits reliefs, pointus ou non, sont faciles à réaliser par simple moulage de l'implant quand il est moulé en zircone.

Les implants de l'invention peuvent être réalisés en tout matériau usuel biocompatible, notamment en titane. Cependant, dans une forme de réalisation particulièrement préférée, les implants sont réalisés en zircone. On constate, en effet, que les implants en zircone selon l'invention, induisent une consolidation et une ostéointégration très rapides, de sorte que les corps d'implants peuvent être réalisés avec une surface extérieure moulée peu traumatisante, permettant un enfoncement manuel simple et facile à contrôler sans outillage spécial. L'impaction peut même se résumer à un enfoncement par simple poussée manuelle et petites rotations alternées.

Les implants en zircone sont, de préférence, moulés sans aucun usinage.

Le praticien pourra également monter plus rapidement la prothèse dentaire sur le pilier puisque l'implant, plus vite intégré, permettra une mise en charge plus précoce.

Les implants en zircone évitent des contacts électriquement conducteurs avec le nerf dentaire et permettent une meilleure apparence esthétique, n'étant pas visibles sous la paroi de la prothèse dentaire qui est souvent mince et translucide.

Les implants du jeu selon l'invention présentent une très grande solidité, qui, jointe à une excellente ostéointégration avec un traumatisme minime à la pose, entraîne une longévité exceptionnelle.

On peut ainsi miniaturiser ces implants, par exemple pour utiliser plusieurs implants pour supporter une prothèse de remplacement d'une seule dent.

Le cas échéant les implants peuvent être associés à des coiffes élastiques interposées entre l'os et le corps d'implant, ou entre le pilier et la prothèse, pour restituer la résilience à la compression qui caractérise les dents naturelles.

L'invention a également pour objet les implants individuels, miniaturisés ou non, susceptibles d'appartenir à un jeu selon l'invention tel que défini dans la revendication 20.

Afin de choisir, dans un jeu, l'implant ayant la bonne direction angulaire de pilier, on peut avantageusement prévoir des implants d'essai, tels que définis dans la revendication 19, par exemple en plastique dur moulé, ou en titane ou zirconium s'ils doivent être restérilisés et dont les surfaces coniques de corps d'implant sont agencées pour permettre une extraction facile et non traumatisante. Par exemple la surface conique du corps d'implant d'essai peut être complètement lisse.

Les angles des implants du jeu d'essai sont avantageusement répartis comme les angles des implants du jeu définitif. Ils peuvent être repérés par un gravage de la valeur de l'angle sur un méplat du pilier.

Les implants du jeu selon l'invention peuvent être conditionnés de façon stérile. Etant en zircone, ils peuvent cependant facilement être stérilisés avant la pose, avec les appareils de stérilisation usuels des praticiens.

L'invention a également pour objet un kit comprenant les implants du jeu selon l'invention et des forets spécialement agencés pour la pose de ces implants tel que défini dans la revendication 21.

Enfin, l'invention a également pour objet un dispositif de moulage de jeux d'implants selon l'invention, en zircone tel que défini dans la revendication 24.

D'autres avantages et caractéristique de l'invention apparaîtront à la lecture de la description suivante, faite à titre d'exemple non limitatif, et se référant au dessin annexé, dans lequel :
la figure 1 représente une vue en élévation d'un implant selon l'invention,
la figure 2 représente une vue en élévation d'un implant selon une variante de l'invention,
la figure 3 représente une vue en élévation d'un implant selon l'invention,
la figure 4 représente une vue, en élévation, d'un implant selon l'invention avec un angle très important entre le corps et le pilier,
la figure 5 représente une vue en section d'un pilier, dans un-plan perpendiculaire à son axe,
la figure 6 représente une vue en élévation d'un implant avec un pilier à bout sphérique,
la figure 7 représente une vue en élévation d'un foret pour la pose des implants selon l'invention,
la figure 8 représente une vue de dessus d'une bague de ce foret,
la figure 9 représente une vue schématique d'un dispositif de moulage d'un jeu d'implants en zircone selon l'invention.

L'implant dentaire monobloc comporte un corps d'implant 1 en zircone de préférence avec un encombrement 9 extérieurement conique déterminant une surface conique à conicité, par exemple de 4 ou 5°, éventuellement subdivisée en surfaces annulaires anti-rejet 4 dont le nombre est proportionnel à la longueur enfouie de l'implant. Les surfaces 4 forment des arêtes circulaires surmontées de rétrécissements formant des redans 4 bis de révolution ou polygonaux. L'extrémité enfouie 6 de l'implant 1 est de préférence polygonale e̅t conique inversé en 6bis pour un effet anti-rejet et anti-rotationnel.

L'une des surfaces coniques annulaires, de préférence la surface inférieure, peut présenter de courts reliefs ou ergots 4ter qui s'incrusteront dans la matière osseuse lors de l'enfoncement.

Dans un plan axial, ces moyens anti-rejet déterminent des formes de dents ou reliefs d'accrochage qui ne s'opposent pas à l'enfoncement dans le trou pratiqué dans l'os, mais s'opposent à l'extraction, et cela d'autant plus que l'os se sera régénéré dans les redans.

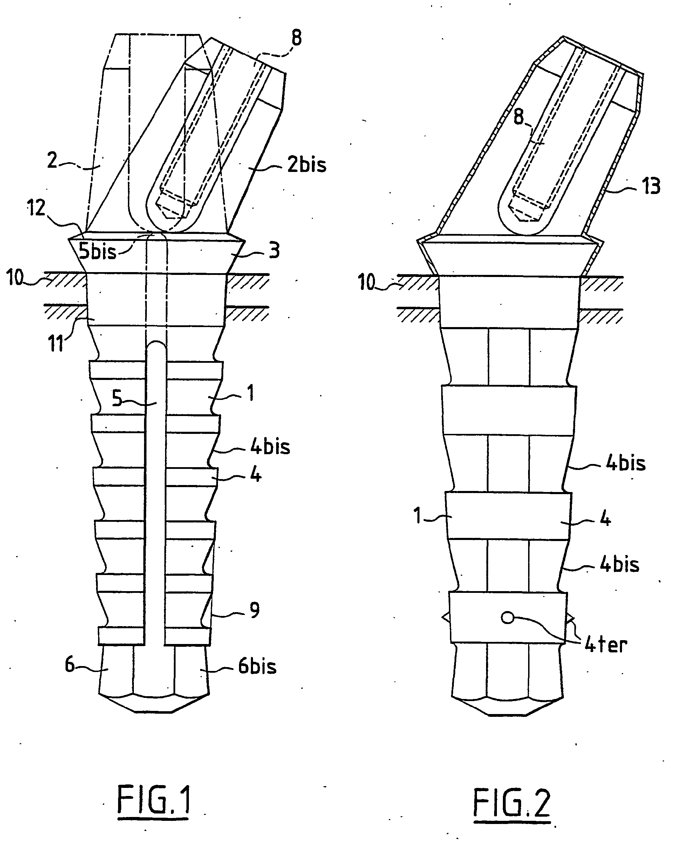

Sur la partie conique 9 deux rainures longitudinales 5 sont prévues afin d'augmenter l'effet anti-rotationnel (Fig. 1).

Dans une forme de réalisation particulière, les rainures 5 peuvent se prolonger sur toute la longueur du corps d'implant, comme représenté en trait mixte, pour former une rainure dont la section est semi-circulaire et dont l'extrémité supérieure 5bis est accessible, après implantation du corps d'implant dans l'os de la mâchoire. Le praticien peut alors forer la partie de l'os en face de la rainure avec un petit foret de diamètre légèrement inférieur à celui de la section de la rainure et qui sera guidé dans la rainure lors du forage, ce qui déterminera un trou cylindrique, dont une moitié est constituée par la rainure et l'autre par l'os. Le praticien pourra ensuite insérer dans ce trou, une petite aiguille cylindrique, par exemple en zircone, qui assurera un effet de clavette, interdisant toute rotation de l'implant. La partie émergeante de l'aiguille-clavette sera ensuite coupée et meulée avec une petite fraise diamantée pour épouser la surface émergeante de l'implant.

Au lieu d'être semi-cylindrique, la rainure 5 peut être légèrement conique, de préférence avec la même conicité de 3 à 6°, que le corps d'implant. Dans ce cas, on utilisera un mince forêt de conicité correspondante pour compléter, dans l'os, le passage destiné à recevoir une aiguille ayant la même conicité.

La longueur de ces aiguilles, une fois implantées, peut être égale ou inférieure à la longueur du corps d'implant. Elle peut être, par exemple, de 4 à 10 mm pour un diamètre de 0,5 à 3 mm et, éventuellement, une conicité de 3 à 6°.

L'implant enfoui 1 comporte une partie lisse conique 11 de 2 à 3 mm faisant partie du cône 9 et arrivant au niveau de l'os 10, ce qui permet, après avoir modifié la profondeur du forage, effectué avec un forêt ayant la même conicité que l'implant 1, d'enfoncer moins l'implant 1, en fonction de l'épaisseur de la gencive, afin que le bord du grand diamètre de la partie 3 se confonde avec le bord de la gencive.

Cette partie conique 11, grâce à la conicité choisie, entre 3 et 6°, de préférence 4 ou 5°, permet d'obtenir un contact anti-retrait, avec la zone corticale de l'os dans lequel elle est enfoncée.

La partie conique 3 dite gingivale et émergeant de l'os 10 comporte une seconde face conique 12 sur laquelle la prothèse viendra s'appuyer.

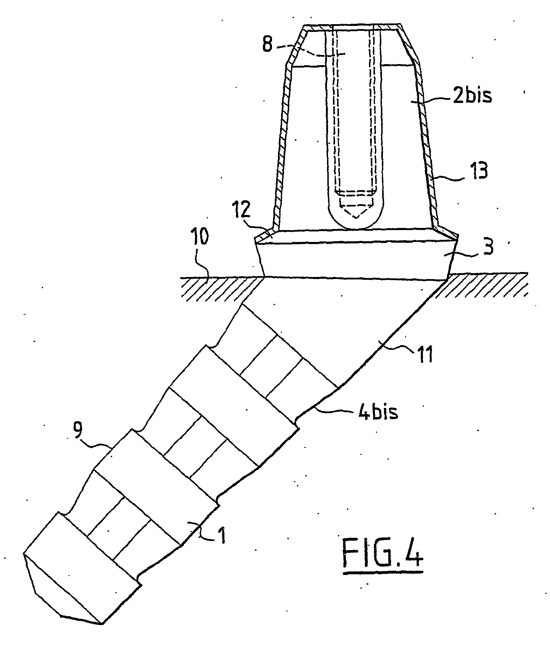

Une coiffe résiliente facultative 13, d'épaisseur 0,1 à 0,5 mm en silicone, ou autre matière souple inaltérable et neutre, acceptée par le corps humain, peut être interposée entre, d'une part le pilier 2 ou 2bis (Fig. 2, 4) et la prothèse qui supporte la dent. Une coiffe similaire 14 peut être interposée entre l'os tendre et l'implant 4. Ces coiffes doivent servir d'amortisseur. Ces coiffes sont obtenues par moulage et s'ajustent parfaitement à chaque diamètre et forme du pilier droit ou incliné et de l'implant 1.

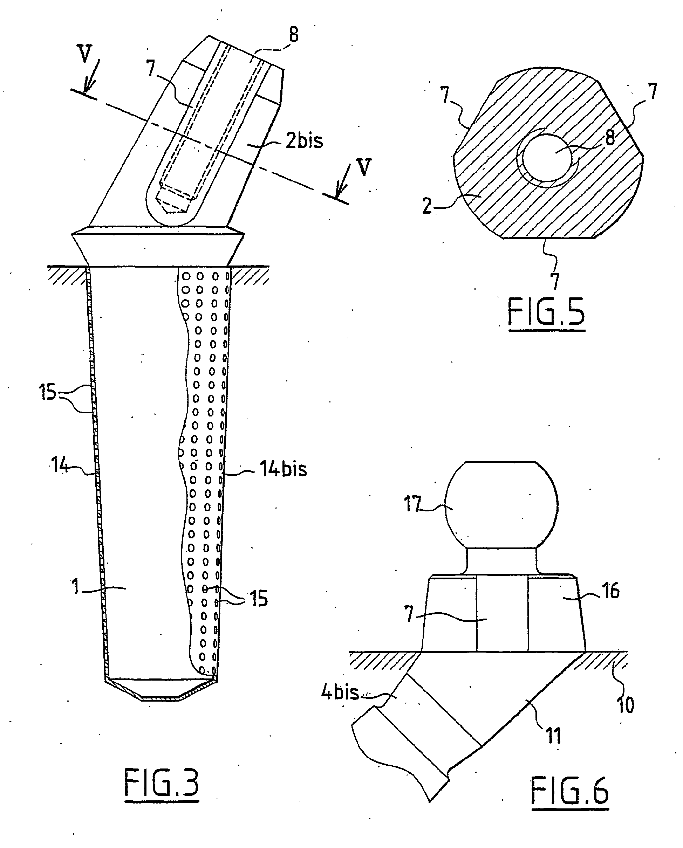

Les piliers 2 et 2bis comportent trois méplats 7 à 120° sur leur surface conique, d'une profondeur de 0,15 à 0,30 mm (Fig. 5). Ces trois méplats s'ajustent avec la clé spéciale servant à enfoncer l'implant et à l'orienter. Ils sont également prévus afin d'éviter la rotation éventuelle de la prothèse.

Dans l'axe des piliers 2 et 2bis, un trou central taraudé 8 peut être prévu pour recevoir une vis de transfixation sur laquelle on aura posé préalablement un peu de ciment servant à fixer une prothèse dentaire, telle que dent ou bridge. Ce trou central taraudé 8 est obtenu lors du moulage de l'implant pour la zircone céramique, avec un insert fileté inséré dans le moule avant injection et dévissable, après moulage. Cet insert est réutilisable de nombreuses fois. Il peut être en acier trempé ou carbure. Cette fixation par transfixation avec vis est facultative. Certains praticiens fixent la prothèse, par scellement, avec du ciment résineux, directement sur les piliers.

Etant donné l'absence de parties creuses dans le corps d'implant 1 et la continuité monobloc entre le corps d'implant 1 et le pilier 2 ou 2bis, on conçoit parfaitement la grande solidité de l'ensemble monobloc, ce qui permet de réaliser des implants de tout petit diamètre, c'est-à-dire 2,5 voire 2 mm et de les associer par deux ou trois, pour une seule dent (les diamètres sont, par exemple, de 2 à 8 mm).

Si la prothèse vient à bouger, un simple re-scellement suffira à la refixer, soit avec le ciment, soit avec les vis de transfixation, après avoir reposé ou non la coiffe élastique servant d'amortisseur.

La coiffe 14 est en matière souple, par exemple en silicone, telle que celle employée comme enveloppe dans les prothèses mammaires, ou, autre matière plastique acceptée par le corps humain.

Un jeu d'implants selon l'invention comporte plusieurs implants tels que ceux qui viennent d'être décrits, ayant des angles différents entre l'axe du pilier 2, 2bis et du corps d'implant 1. Par exemple sur la figure 1 on a représenté un implant dans lequel l'angle entre les deux axes est de 30°. En traits interrompus on a représenté sur cette figure le cas d'un pilier 2 pour un angle nul (voir également Fig. 4). Dans le cas de la figure 4 l'angle est très grand puisqu'il est de 45°.

Sur la figure 6 on voit un implant similaire à celui de la figure 1, avec un pilier 16 présentant des méplats comme représenté sur la figure 5, et se terminant par une partie sphérique 17 d'un diamètre compris entre 2 et 4 mm, et agencé pour recevoir un moyen de fixation complémentaire, par exemple une pince élastique insérée dans un appareil dentaire amovible.

Pour mettre en place un implant selon l'invention le praticien pratique un forage dans l'os avec une fraise ayant la même conicité que celle des implants du jeu. Le cas échéant, il recherche le bon implant du jeu en utilisant un jeu d'implants d'essai ayant pratiquement le même encombrement conique extérieur du corps d'implant. Il vérifie quelle prothèse d'essai donne le bon parallélisme du pilier avec les structures dentaires avoisinantes et choisit, en conséquence, l'implant ayant le bon angle. Après avoir retiré la prothèse d'essai, il introduit l'implant définitif en l'enfonçant dans le trou conique, de préférence en utilisant une clé ou outil spécial qui vient coiffer temporairement le pilier et qui est rendu solidaire en rotation grâce aux méplats 7 présentés par la surface extérieure conique de celui-ci. L'impaction peut même être douce et ne pas nécessiter forcément un outil impacteur, le praticien se contentant alors d'enfoncer fortement, au besoin avec de légers mouvements de rotation en va et vient, l'implant dans le trou, les moyens anti-rejet et anti-rotation tels que 1, 6, 4, 4bis assurant ensuite une parfaitement immobilité de la prothèse dans sa position définitive.

La pose de la prothèse sur le pilier peut être effectuée après une période raccourcie.

L'invention porte également sur un ensemble (kit) comprenant les implants d'un jeu, un outil d'impaction coopérant avec les piliers, et, éventuellement, un jeu d'implants d'essai.

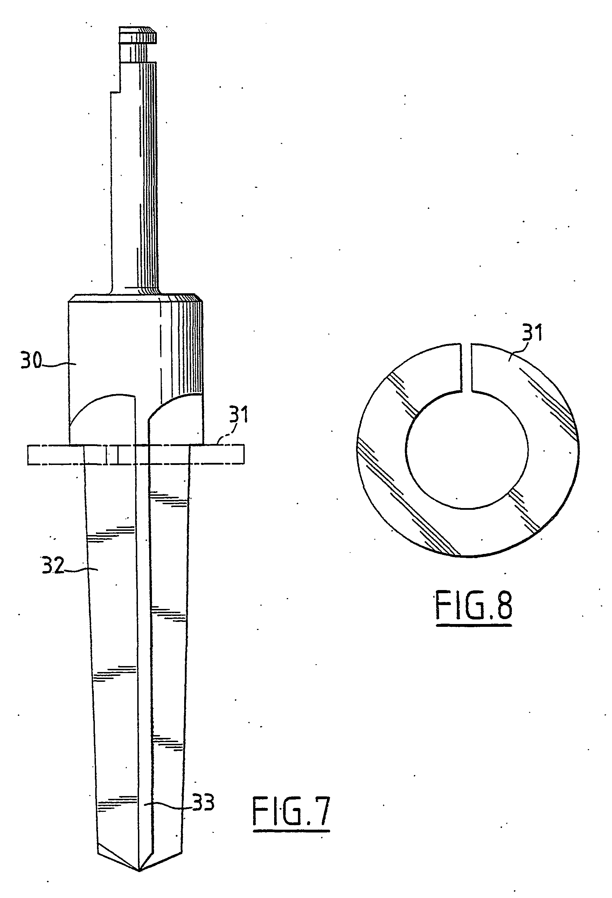

On se réfère, maintenant aux figures 7 et 8.

Afin de réaliser le logement de l'implant 1, dans l'os, on utilise des forets coniques 30, ayant la même conicité que l'implant 1.

Chaque foret 30 correspond au diamètre et à la longueur de l'implant 1 choisi par le praticien.

Ces forets 30, appelés perceurs-aléseurs, comportent une coupe spéciale permettant de réaliser un forage propre et précis avec une vitesse de rotation basse.

La profondeur du forage peut être modifiée dans le but d'enfoncer, plus ou moins, l'implant 1 dans l'os; à cet effet, des rondelles fendues 31 sont glissées sur le foret 30 sous sa tête, par exemple en matière plastique telles que Delrin ; leur épaisseur est de préférence comprise entre 0,5 et 1 mm.

Trois à quatre rondelles 31, au maximum, suffiront pour faire varier la profondeur, permettant de remonter plus ou moins l'implant 1.

Ces forets 30 comportent, de préférence, trois à cinq lèvres 33 coupantes, s'étendant dans un plan radial de l'axe, ce qui permet d'obtenir la réalisation d'un forage sans aucune vibration, garantissant la bonne géométrie et, le bon état de surface dans la corticale de l'os.

Les évidements fraisés 32 permettent aux lèvres 33 de bien couper et de retenir les copeaux d'os. Cette pâte osseuse, mélangée au sang, pourra être retenue dans ces évidements fraisés 32 et être, en partie, réintroduite dans le forage afin de combler les vides de l'implant 1, ce qui provoquera une plus rapide ostéo-intégration de l'implant 1 et permettra une mise en fonction directe, c'est-à-dire une pose immédiate de la prothèse dentaire sur le pilier.

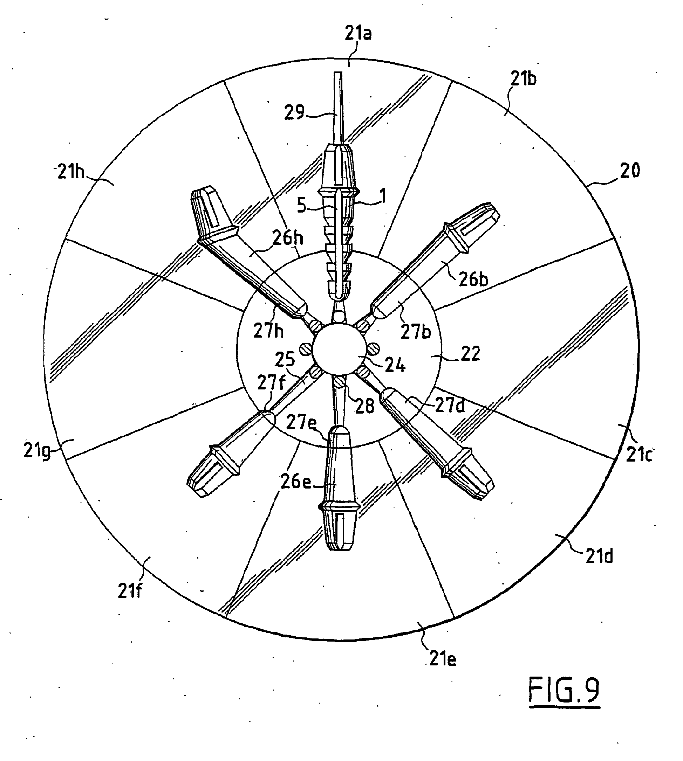

On se réfère maintenant à la figure 9.

Dans le mode de mise en oeuvre préféré de l'invention, l'implant en zircone n'est pas réalisé par usinage, comme le serait un implant en titane, mais par moulage à haute pression de zircone fritté.

On peut avantageusement mouler en une seule fois une pluralité d'implants, par exemple les six ou huit implants d'un jeu d'implants selon l'invention, en utilisant un moule multiple, dont on voit l'une des moitiés sur la figure 9.

Ce moule multiple comporte une pluralité de secteurs de cercle dont on voit une vue de dessus des secteurs 21a à 21 h du demi-moule inférieur. Chaque secteur comporte, disposée en direction radiale, une demi-empreinte pour le pilier et une partie supérieure du corps d'implant. On comprend donc que chacun des secteurs 21 a à 21 h sera recouvert d'un secteur associé, symétrique par rapport au plan de la figure, et comprenant la demi-empreinte symétrique de façon à réaliser l'empreinte complète, le démoulage s'effectuant en séparant les deux ensembles de secteurs dans une direction perpendiculaire au plan de la figure, les faces apparentes des secteurs étant constitutives du plan de joint. Les différences secteurs 21 a à 21 h sont séparables et, pour l'injection, solidarisés dans la position représentée sur la figure par un moyen de solidarisation quelconque. Lorsque l'autre demi-moule multiple est appliqué sur le demi-moule représenté sur la figure 9, des moyens de solidarisation des deux demi-moules sont également prévus d'une façon classique pour résister à la pression d'injection.

On voit sur la figure que les secteurs 21 a, 21 b et 21 h correspondent à trois implants d'un jeu ayant le même diamètre et la même longueur de corps d'implant (pour la simplicité du dessin, les empreintes ont été dessinées schématiquement, sans faire apparaître les surfaces correspondant aux reliefs ou creux tels que 4bis, 5, 6bis). On voit sur le secteur 21 a l'implant 1 tel qu'il se présente après démoulage en reposant dans la demi-empreinte. Le secteur 21 a et le secteur correspondant qui lui est superposé de l'autre demi-moule, définissent l'empreinte d'un implant dans lequel l'angle entre le corps et le pilier est de 0°. Le secteur 21 b définit un implant de même taille avec un angle de 5°. Le secteur 21 h définit un implant avec un angle de 35°. On comprend que les autres secteurs peuvent comporter des empreintes pour les implants ayant des angles piliers-corps intermédiaires entre ceux représentés en 21 a, 21 b et 21 h.

Pour la simplicité du dessin, on n'a pas représenté les demi-empreintes du secteur 21 c et 21g. Quant aux secteurs 21 d, 21 e et 21f, ils comportent des empreintes identiques à celles de l'empreinte 21 a.

Les différents secteurs sont regroupés en cercle autour d'un demi-noyau cylindrique 22 qui comporte, en face de chaque secteur, des demi-empreintes pour la partie inférieure du corps d'implant. II en résulte que dans l'association représentée, la juxtaposition en cercle des différents secteurs autour du demi-noyau 22, détermine une pluralité de demi-empreintes radiales complètes, l'ensemble étant complété par l'autre demi-moule symétrique, comprenant aussi un demi-noyau symétrique, lorsqu'il est juxtaposé sur le demi-moule représenté sur le dessin. Les parties de demi-empreintes, telles que 27b à 27h sont reliées à une chambre centrale 24 par autant de canaux radiaux 25, ces canaux radiaux étant susceptibles d'être bouchés par des obturateurs d'injection amovibles 28. On comprend donc que lorsque le moule entier est assemblé, il suffit d'introduire dans le volume constitué par la superposition des deux chambres 24, la préparation fluide de zircone sous pression, de sorte que le zircone passant par ceux des canaux dont on a préalablement enlevé l'obturateur 28, vient remplir les empreintes formées par la superposition des deux demi-empreintes des secteurs qui coopèrent pour réaliser la même empreinte.

Le démoulage s'effectue en séparant les deux demi-moules puis en extrayant simplement les implants 1 moulés.

On voit, sur la figure, que les parties de demi-empreintes 27d à 27f ont des longueurs différentes, ce qui permet de réaliser des implants ayant le même diamètre mais ayant une longueur chaque fois différente.

Le plus généralement on préfère que le demi-noyau cylindrique 22, et le demi-noyau symétrique complémentaire présentent des parties d'empreintes 27a à 27h, qui sont toutes identiques et correspondent donc à un type d'implant d'un jeu ayant la même longueur et le même diamètre. Dans ce cas, les différentes parties d'empreintes des secteurs correspondent à cette dimension de diamètre d'implant, chaque secteur correspondant, par exemple, à un pilier d'inclinaison différente. On peut ainsi mouler en une seule fois les huit implants d'un jeu d'implants de même longueur et de même diamètre, mais ayant tous les angles corps-piliers
selon l'invention. Cependant, si certains implants du jeu sont utilisés plus fréquemment que d'autres, par exemple ceux ayant un angle nul ou un angle faible, on peut aussi utiliser plusieurs secteurs ayant des demi-empreintes absolument identiques pour mouler un jeu comprenant des implants identiques et d'autres ayant un angle différent. On peut aussi, grâce aux obturateurs 28, ne mouler que ceux des implants dont on a besoin plus fréquemment.

En définitive, on comprend donc que l'on peut juxtaposer des secteurs ayant des parties d'empreintes identiques, ou au contraire différentes et que l'on peut utiliser des noyaux ayant des empreintes identiques ou au contraire différentes, notamment en longueur. Le plus simple étant d'avoir des noyaux dont toutes les empreintes sont identiques, chaque noyau correspondant à une longueur déterminée d'implants, différente de la longueur d'un autre noyau.

Cependant toutes les autres combinaisons sont possibles et permettent de s'adapter de façon très précise à la demande instantanée d'implants qui peuvent être adressés par les clients.

Dans un perfectionnement dans lequel l'implant présente une ou plusieurs rainures cyclindriques ou coniques 5 débouchant à l'extrémité supérieure du corps, l'empreinte peut présenter, de préférence à l'extrémité supérieure, et dans l'axe du pilier, un prolongement permettant de mouler d'un seul tenant, une aiguille de clavetage 29, qui pourra être séparée de l'implant par simple cassure à sa base.

## Revendications

1. Jeu d'implants dentaires comprenant plusieurs implants monoblocs présentant une partie formant corps d'implant (1) et une partie formant pilier (2, 2bis), les différents implants du jeu présentant des angles différents entre l'axe du corps d'implant et l'axe du pilier, avec des corps d'implant
qui sont agencés pour pouvoir être fixés dans l'os mandibulaire ou maxillaire (10) par impaction,
qui présentent chacun un encombrement (9) extérieurement conique circulaire, ayant une conicité entre 3° et 6° et incluant, à la fois, au moins une surface annulaire conique (4), qui est délimitée par le corps d'implant, et une partie lisse conique (11), qui est située à l'extrémité supérieure du corps d'implant, sous le pilier, et qui est jointe à ce pilier par une partie de jonction (3), cette ou ces surfaces annulaires coniques (4) et cette partie lisse conique (11) ayant ladite conicité et étant adaptées, lorsque le corps d'implant est fixé dans l'os, pour être respectivement enfouie en profondeur dans l'os et enfoncée dans la zone corticale de l'os, tandis que la partie de jonction a une plus grande conicité et est adaptée, lorsque le corps d'implant est fixé dans l'os pour émerger de l'os et être située au niveau de la traversée de la gencive, et
qui sont pourvus de moyens anti-remontée (4, 4bis, 4ter, 6, 11), incluant la ou les surfaces annulaires coniques (4) et la partie lisse conique (11) qui produisent un effet anti-remontée dû à leur conicité, et de moyens anti-rotation (4bis, 5, 6bis), susceptibles de coopérer avec l'os adjacent (10) pour maintenir l'implant dans sa position.

2. Jeu selon la revendication 1, **caractérisé en ce qu'**il est en zircone moulé.

3. Jeu selon l'une des revendications 1 ou 2, **caractérisé en ce que** ladite conicité est de 4 ou 5°.

4. Jeu selon l'une des revendications 1 ou 2, **caractérisé en ce que** ladite conicité est de 3°.

5. Jeu selon l'une quelconque des revendications précédentes **caractérisé en ce que** la partie lisse conique (11) a une hauteur de 2 à 3 mm.

6. Jeu selon l'une quelconque des revendications précédentes, **caractérisé en ce que** les surfaces annulaires coniques (4) définissent une pluralité de zones d'accrochage formant des redans (4bis) de plus petit diamètre, à titre de moyens anti-remontée.

7. Jeu selon l'une quelconque des revendications précédentes, **caractérisé en ce qu'**il présente, à titre de moyens anti-remontée, des petits reliefs (4ter) angulairement équidistants s'étendant radialement sur une courte distance depuis une des surfaces annulaires coniques (4), notamment à la partie inférieure du corps d'implant (1).

8. Jeu selon la revendication 7, **caractérisé en ce que** ladite courte distance est de l'ordre de 0,1 à 0,3 mm.

9. Jeu selon l'une quelconque des revendications précédentes, **caractérisé en ce que** les angles du jeu s'étagent entre 0 et 45°.

10. Jeu selon l'une quelconque des revendications précédentes, **caractérisé en ce que** les angles du jeu s'étagent entre 0 et 30°.

11. Jeu selon l'une quelconque des revendications précédentes, **caractérisé en ce que** les angles du jeu varient selon des différences comprises entre 5 et 10°.

12. Jeu selon l'une quelconque des revendications précédentes, **caractérisé en ce que** la partie de jonction (3) présente, du côté du pilier (2), une face conique (12) d'appui pour une prothèse dentaire.

13. Jeu selon l'une quelconque des revendications précédentes, **caractérisé en ce que** le pilier comporte des méplats (7) permettant, notamment, la coopération avec une clé pour l'insertion de l'implant.

14. Jeu selon l'une quelconque des revendications précédentes, **caractérisé en ce que** le pilier comporte un orifice fileté pour la transfixation d'une prothèse sur le pilier.

15. Jeu selon l'une quelconque des revendications précédentes, **caractérisé en ce que** les moyens anti-rotation sont formés de méplats ou rainures ou surfaces polygonales (4bis, 5).

16. Jeu selon la revendication 15, **caractérisé en ce que** la rainure (5) présente une section semi-circulaire, cylindrique ou conique et que son extrémité débouche à l'extrémité supérieure du corps d'implant (1) pour permettre le passage d'un foret mince destiné à forer la partie osseuse en regard pour la constitution d'un passage cylindrique ou conique dans lequel il peut être introduit une aiguille cylindrique ou conique (29) faisant office de clavette anti-rotation.

17. Jeu selon l'une quelconque des revendications précédentes, **caractérisé en ce que** les corps d'implants présentent une extrémité (6, 6bis) ayant une conicité inversée par rapport à la conicité de l'encombrement (9).

18. Jeu selon l'une quelconque des revendications précédentes, **caractérisé en ce que** les implants présentent un diamètre miniaturisé de l'ordre de 2 mm.

19. Kit comprenant un jeu d'implants, conforme à l'une quelconque des revendications 1 à 18 et des implants d'essai ayant le me̊me encombrement et les mêmes angles entre les axes de corps et de piliers que les implants du jeu.

20. Implant dentaire monobloc présentant les caractéristiques d'un implant, telles que définies dans l'une quelconque des revendications 1 à 18.

21. Kit comprenant un jeu d'implants, conforme à l'une quelconque des revendications 1 à 19, et des forets dentaires pour le forage d'un trou destiné à recevoir un implant appartenant à ce jeu, chaque foret présentant une conicité entre 3 et 6°, identique à la conicité de l'encombrement (9) du corps d'implant (1), et une pluralité de lèvres coupantes (33) qui s'étendent dans un plan radial de l'axe du foret.

22. Kit selon la revendication 21, **caractérisé en ce que** chaque foret présente au moins trois lèvres (33).

23. Kit selon l'une des revendications 21 ou 22, **caractérisé en ce que** chaque foret peut recevoir sur sa tête une ou plusieurs rondelles fendues (31) pour faire varier la profondeur d'enfoncement.

24. Moule pour la fabrication des implants d'un jeu selon l'une quelconque des revendications 1 à 19, **caractérisé en ce qu'**il comporte deux demi-moules assemblés face en face sur un plan de joint, chacun des demi-moules comportant une pluralité de secteurs séparables présentant une demi-empreinte d'une partie d'implant, lesdits secteurs étant disposés autour d'un demi-noyau central (22) séparable présentant en alignement avec chaque demi-empreinte de secteur, une demi-empreinte d'extrémité inférieure d'implant en continuation avec la demi-empreinte du secteur concerné, ces deux demi-empreintes présentant des surfaces correspondant à celles (3, 4, 4bis, 4ter, 5, 6, 11, 12) des implants.

25. Moule selon la revendication 24, **caractérisé en ce que** chaque demi-noyau (22) présente un passage central (24) d'arrivée de matière à injecter sous pression, à partir duquel s'étendent des passages radiaux (25) aboutissant à l'extrémité de chaque demi-empreinte de noyau.

26. Moule selon l'une quelconque des revendications 24 et 25, **caractérisé en ce qu'**il comporte des moyens d'obturation individuels (28) des canaux d'arrivée.

27. Moule selon l'une quelconque des revendications 24 à 26, **caractérisé en ce que** certains au moins de secteurs présentent une demi-empreinte ayant un angle différent entre l'axe du pilier d'implant et l'axe du corps d'implant.

28. Moule selon l'une quelconque des revendications 24 à 27, **caractérisé en ce que** l'empreinte d'implant est prolongée par une empreinte d'aiguille (29).

29. Ensemble des moules selon l'une quelconque des revendications 24 à 28, **caractérisé en ce qu'**il comporte plusieurs paires de demi-noyaux interchangeables (22) ayant des diamètres et/ou des profondeurs d'extrémité d'empreintes différents d'un noyau à un autre, et une pluralité de jeux de secteurs présentant une demi-empreinte de diamètre correspondant, chaque fois, au diamètre des demi-empreintes d'un demi-noyau.

## Claims

1. Set of dental implants comprising a number of one-piece implants having a part that forms the implant body (1) and a part that forms a post (2, 2bis), the various implants in the set having different angles between the axis of the implant body and the axis of the post, with implant bodies
- which are designed to be capable of being fixed in the mandibular or maxillary bone (10) by impaction;
- which each have a circular, externally conical required space (9) which has a conicity of between 3° and 6° and encloses, at the same time, at least one conical annular surface (4) which is delimited by the implant body, and a conical smooth part (11) which is situated at the upper end of the implant body, under the post, and is joined to the said post by a junction part (3), the said conical annular surface or surfaces (4) and the said conical smooth part (11) having the said conicity and being adapted, when the implant body is fixed in the bone, to be respectively buried deep in the bone and inserted in the cortex of the bone, whereas the junction part has greater conicity and is adapted, when the implant body is fixed in the bone, to stand out from the bone and to be situated at the level of the passage through the gum; and
- which are provided with anti-resurgence means (4, 4bis, 4ter, 6, 11) which enclose the conical annular surface or surfaces (4) and the conical smooth part (11) which produce an anti-resurgence effect due to their conicity, and anti-rotation means (4bis, 5, 6bis) which are capable of cooperating with the adjacent bone (10) in order to hold the implant in its position.

2. Set according to claim 1, **characterised in that** it is made of moulded zirconia.

3. Set according to either of claims 1 or 2, **characterised in that** the said conicity is a conicity of 4 or 5°.

4. Set according to one of claims 1 or 2, **characterised in that** the said conicity is a conicity of 3°.

5. Set according to any of the preceding claims, **characterised in that** the conical smooth part (11) has a height of 2 to 3 mm.

6. Set according to any of the preceding claims, **characterised in that** the conical annular surfaces (4) define a plurality of hitching-on zones which form steps (4bis) of smaller diameter, as anti-resurgence means.

7. Set according to any of the preceding claims, **characterised in that** it has, as anti-resurgence means, small, angularly equidistant raised portions (4ter) which extend radially over a short distance from one of the conical annular surfaces (4), particularly at the lower part of the implant body (1).

8. Set according to claim 7, **characterised in that** the said short distance is of the order to 0.1 to 0.3 mm.

9. Set according to any of the preceding claims, **characterised in that** the angles of the set range in stages between 0 and 45°.

10. Set according to any of the preceding claims, **characterised in that** the angles of the set range in stages between 0 and 30°.

11. Set according to any of the preceding claims, **characterised in that** the angles of the set vary by differences of between 5 and 10°.

12. Set according to any of the preceding claims, **characterised in that** the junction part (3) has, on the side nearest the post (2), a conical supporting face (12) for a dental prosthesis.

13. Set according to any of the preceding claims, **characterised in that** the post comprises flats (7) which make it possible, in particular, to cooperate with a spanner for the insertion of the implant.

14. Set according to any of the preceding claims, **characterised in that** the post comprises a threaded orifice for the transfixing of a prosthesis on the post.

15. Set according to any of the preceding claims, **characterised in that** the anti-rotation means are made up of flats or grooves or polygonal surfaces (4bis, 5).

16. Set according to claim 15, **characterised in that** the groove (5) has a semicircular, cylindrical or conical cross-section and that its end emerges at the upper end of the implant body (1) in order to permit the passage of a thin drill which is intended to drill the bony part opposite for the purpose of constituting a cylindrical or conical passage into which there can be introduced a cylindrical or conical needle (29) that serves as an anti-rotation key.

17. Set according to any of the preceding claims, **characterised in that** the implant bodies have an end (6, 6bis) which has a reverse conicity compared to the conicity of the required space (9).

18. Set according to any of the preceding claims, **characterised in that** the implants have a miniaturised diameter of the order of 2 mm.

19. Kit comprising a set of implants in conformity with any of claims 1 to 18 and test implants having the same required space and the same angles between the axes of the bodies and the posts as the implants in the set.

20. One-piece dental implant having the characteristics of an implant such as are defined in any of claims 1 to 18.

21. Kit comprising a set of implants in conformity with any of claims 1 to 19, and dental drills for drilling a hole which is intended to receive an implant belonging to the said set, each drill having a conicity of between 3 and 6° which is identical to the conicity of the space (9) required by the implant body (1), and a plurality of cutting lips (33) which extend in a radial plane of the axis of the drill.

22. Kit according to claim 21, **characterised in that** each drill has at least three lips (33).

23. Kit according to either of claims 21 or 22, **characterised in that** each drill is capable of receiving, on its head, one or more split washers (31) in order to vary the depth of insertion.

24. Mould for manufacturing the implants of a set according to any of claims 1 to 19, **characterised in that** it comprises two half-moulds which are fitted together face to face over a joint plane, each of the half-moulds comprising a plurality of separable sectors having a half-impression of part of an implant, the said sectors being disposed around a separable central half-core (22) having, in alignment with each half-impression of a sector, a half-impression of the lower end of the implant as a continuation with the half-impression of the sector concerned, the said two half-impressions having surfaces that correspond to those (3, 4, 4bis, 4ter, 5, 6, 11, 12) of the implants.

25. Mould according to claim 24, **characterised in that** each half-core (22) has a central passage (24) for the admission of material which is to be injected under pressure, from which passage there extend radial passages (25) which terminate at the end of each half-impression of a core.

26. Mould according to either of claims 24 and 25, **characterised in that** it comprises individual means (28) for occluding the admission ducts.

27. Mould according to any of claims 24 to 26, **characterised in that** at least certain sectors have a half-impression having a different angle between the axis of the implant post and the axis of the implant body.

28. Mould according to any of claims 24 to 27, **characterised in that** the impression of an implant is prolonged by an impression (29) of a needle.

29. Collection of the moulds according to any of claims 24 to 28, **characterised in that** it comprises a number of pairs of interchangeable half-cores (22) having end-of-impression diameters and/or depths which differ from one core to another, and a plurality of sets of sectors having a half-impression with a diameter that corresponds, on each occasion, to the diameter of the half-impressions of a half-core.

## Patentansprüche

1. Zahnitmplantatsatz, mehrere einstückige Implantate umfassend, die einen einen Implantatkörper (1) bildenden Bereich und einen einen Pfeiler (2,2bis) bildenden Bereich aufweisen, wobei die unterschiedlichen Implantate des Satzes unterschiedliche Winkel zwischen der Achse des Implantatkörpers und der Achse des Pfeilere aufweisen, mit Implantatkörpern, die ausgebildet sind, um in dem Mandibular- oder Kieferknochen (10) durch Einschlagen befestigt werden zu können, die jeder einen außen kreisförmig konischen Raumbedarf (9) aufweisen, der eine Konizität von 3° bis 6° hat und der sowohl mindestens eine konische Ringfläche (4), die durch den Implantatkörper begrenzt ist, als auch einen glatten konischen Bereich (11) einschließt, der am oberen Ende des Implantatkörpers unter dem Pfeiler liegt und der mit diesem Pfeiler durch einen Verbindungsbereich (3) verbunden ist, wobei diese konische(n) Ringfläche(n) (4) und dieser glatte konische Bereich (11) die genannte Konizität haben und angepasst sind, wenn der Implantatkörper im Kochen befestigt wird, um jeweils in die Tiefe des Knochens eingegraben und in die kortikale zone des Knochens eingetrieben zu werden, während der Verbindungsbereich eine größere Konizität aufweist und angepasst ist, wenn der Implantatkörper im Knochen befestigt wird, um aus dem Knochen heranzuragen und an dem Übergang des Zahnfleisches zu liegen und die mit Mitteln gegen eine Aufwärtsbewegung (4,4bis, 4ter, 6, 11), die die konische(n) Ringfläche(n) (4) und den glatten konischen Bereich (11) einschließen, die aufgrund ihrer Konizität eine Wirkung einer Antiaufwärtsbewegung erzeugen, und mit Mitteln gegen eine Drehung (4 bis, 5, 6 bis) versehen sind, die geeignet sind, mit dem benachbarten Kochen zusammenzuarbeiten, und das Implantat in seiner Position zu halten.

2. Satz nach Anspruch 1, **dadurch gekennzeichnet, dass** er aus geformter Zirkonerde besteht.

3. Satz nach einem der Ansprüche 1 oder 2, **dadurch gekennzeichnet, dass** die Konizität 4° oder 5° beträgt.

4. Satz nach einem der Ansprüche 1 oder 2, **dadurch gekennzeichnet, dass** die Konizität 3° beträgt.

5. Satz nach einem beliebigen der vorhergehenden Ansprüche, **dadurch gekennzeichnet, dass** der konische glatte Bereich (11) eine Höhe von 2 bis 3 mm aufweist.

6. Satz nach einem beliebigen der vorhergehenden Ansprüche, **dadurch gekennzeichnet, dass** die konischen Ringflächen (4) eine Mehrzahl von Zonen zum Verhaken definieren, die Stufen (4bis) als Mittel gegen eine Aufwärtsbewegung mit kleinerem Durchmesser bilden.

7. Satz nach einem beliebigen der vorhergehenden Ansprüche, **dadurch gekennzeichnet, dass** er als Mittel gegen eine Aufwärtsbewegung kleine winkelmäßig gleichabständige Reliefs (4ter) aufweist, die sich radial über eine kurze Distanz von einer der konischen Ringflächen (4), insbesondere im unteren Bereich des Implantatkörpers (1) erstrecken.

8. Satz nach Anspruch 7, **dadurch gekennzeichnet, dass** die kurze Distanz in der Größenordnung von 0,1 bis 0,3 mm liegt.

9. Satz nach einem beliebigen der vorhergehenden Ansprüche, **dadurch gekennzeichnet, dass** die Winkel des Satzes zwischen 0° und 45° abgestuft sind.

10. Satz nach einem beliebigen der vorhergehenden Ansprüche, **dadurch gekennzeichnet, dass** die Winkel des Satzes zwischen 0° und 30° abgestuft sind.

11. satz nach einem beliebigen der vorhergehenden Ansprüche, **dadurch gekennzeichnet, dass** die Winkel des Satzes gemäß Differenzen variieren, die zwischen 5° und 10° liegen.

12. Satz nach einem beliebigen der vorhergehenden Ansprüche, **dadurch gekennzeichnet, dass** der Verbindungsbereich (3) auf der Seite des Pfeilers (2) eine konische stützfläche (12) für eine zahnprothese aufweist.

13. Satz nach einem beliebigen der vorhergehenden Ansprüche, **dadurch gekennzeichnet, dass** der Pfeiler Abflachungen (7) umfasst, die insbesondere die Zusammenarbeit mit einem Schlüssel zum Einführen des Implantats ermöglichen.

14. Satz nach einem beliebigen der vorhergehenden Ansprüche, **dadurch gekennzeichnet, dass** der Pfeiler eine mit Gewinde versehene Öffnung für Befestigung einer Prothese an dem Pfeiler umfasst.

15. Satz nach einem beliebigen der vorhergehenden Ansprüche, **dadurch gekennzeichnet, dass** die Mittel gegen Drehung durch Abflachungen oder polygonale Flächen (4bis, 5) gebildet sind.

16. Satz nach Anspruch 15, **dadurch gekennzeichnet, dass** die Nut (5) einen halbkreisförmigen, zylindrischen oder konischen Querschnitt aufweist oder dass ihr Ende am oberen Ende des Implantatkörpers (1) mündet, um den Durchgang eines dünnen Bohrers zu gestatten, der vorgesehen ist, den gegenüberliegenden Knochenbereich für die Bildung eines zylindrischen oder konischen Durchganges zu bohren, in den eine zylindrische oder konische Nadel (29) eingeführt werden kann, die die Aufgabe eines Keils gegen Drehung übernimmt.

17. Satz nach einem beliebigen der vorhergehenden Ansprüche, **dadurch gekennzeichnet, dass** die Implantatkörper ein Ende (6, 6bis) aufweisen, das eine umgekehrte Konizität in Bezug auf die Konizität des Raumbedarfs (9) aufweist.

18. Satz nach einem beliebigen der vorhergehenden Ansprüche, **dadurch gekennzeichnet, dass** die Implantate einen miniaturisierten Durchmesser in der Größenordnung von 2 mm aufweisen.

19. Bausatz, umfassend einen Implantatsatz nach einem beliebigen der Ansprüche 1 bis 18 und Versuchsimplantate, die den gleichen Raumbedarf und die gleichen Winkel zwischen den Achsen der Körper und der Pfeiler wie die Implantate des Satzes aufweisen.

20. Einstückiges Zahnimplantat, das die Eigenschaften eines Implantats aufweist, wie sie in einem beliebigen der Ansprüche 1 bis 18 definiert sind.

21. Bausatz, einen Implantatsatz nach einem beliebigen der Ansprüche 1 bis 19 und Zahnbohrer für das Bohren eines Lochs umfassend, das vorgesehen ist, ein zu diesem Satz gehörendes Implantat aufzunehmen, wobei jeder Bohrer eine Konizität zwischen 3° und 6° identisch zur Konizität des Raumbedarfes (9) des Implantatkörpers (1) und eine Mehrzahl von Schneidlippen (33) aufweist, die sich in einer radialen Ebene zur Achse des Bohrers erstrecken.

22. Bausatz nach Anspruch 21, **dadurch gekennzeichnet, dass** jeder Bohrer mindestens drei Lippen (33) aufweist.

23. Bausatz nach einem der Ansprüche 21 oder 22, **dadurch gekennzeichnet, dass** jeder Bohrer auf seinen Kopf eine oder mehrere gespaltene Scheiben (31) aufnehmen kann, um die Eindringtiefe zu variieren.

24. Form für die Herstellung von Implantaten eines Satzes nach einem beliebigen der Ansprüche 1 bis 19, **dadurch gekennzeichnet, dass** sie zwei Halbformen umfasst, die stirnflächig an der Verbindungsebene zusammengesetzt sind, wobei jede Halbform eine Mehrzahl von trennbaren Sektoren umfasst, die einen Halbeindruck eines Implantatbereiches aufweisen, wobei die Sektoren um einen mittleren trennbaren Halbkern (22) angeordnet sind, der in Ausrichtung mit jedem Halbeindruck des Sektors einen Halbeindruck des unteren Endes des Implantats in Fortsetzung mit dem Halbeindruck des betroffenen Sektors aufweist, wobei diese zwei Halbeindrücke Flächen entsprechend denen (3, 4, 4bis, 4ter, 5, 6, 11, 12) der Implantate aufweisen.

25. Form nach Anspruch 24, **dadurch gekennzeichnet, dass** jeder Halbkern (22) einen zentralen Durchgang (24) für das Eintreten von unter Druck einzuspritzendem Material aufweist, von dem sich radiale Durchgänge (25) erstrecken, die am Ende jedes Halbeindrucks des Kerns auftreffen.

26. Form nach einem beliebigen der Ansprüche 24 und 25, **dadurch gekennzeichnet, dass** sie Mittel zum individuellen Verschließen (28) der Eintrittskanäle umfasst.

27. Form nach einem beliebigen der Ansprüche 24 bis 26, **dadurch gekennzeichnet, dass** mindestens einige der Sektoren einen Halbeindruck aufweisen, der einen unterschiedlichen Winkel zwischen der Achse des pfeilers des Implantats und der Achse des Körpers des Implantats aufweist.

28. Form nach einem beliebigen der Ansprüche 24 bis 27, **dadurch gekennzeichnet, dass** der Implantateindruck durch einen Eindruck einer Nadel (29) verlängert wird.

29. Anordnung aus Formen nach einem beliebigen der Ansprüche 24 bis 28, **dadurch gekennzeichnet, dass** sie mehrere Paare von auswechselbaren Halbkernen (22), die von einem Kern zum anderen unterschiedliche Durchmesser und/oder Tiefen des Endes von Eindrücken haben und eine Mehrzahl von Sektorensätzen umfasst, die einen Halbeindruck mit entsprechendem Durchmesser aufweisen, jedes Mal entsprechend dem Durchmesser eines Halbkerns.
